# EUROPÄISCHE PATENTSCHRIFT

(11) **EP 0 368 039 B1**
(45) Veröffentlichungstag und Bekanntmachung des Hinweises auf die Patenterteilung: **12.04.1995**
(21) Anmeldenummer: 89119243.7
(22) Anmeldetag: 17.10.1989
(51) Int. Cl.: G03B 9/20, G03B 9/60

(54) **Verschluss für eine photogrammetrische Aufnahmekamera**
Shutter for a photogrammetric camera
Obturateur pour caméra photogrammétrique

(30) Priorität: 05.11.1988 DE 3837682
(43) Veröffentlichungstag der Anmeldung: 16.05.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Felle, Karl, D-7082 Oberkochen (DE); Krastel, Heinz, D-7082 Oberkochen (DE)

(56) Entgegenhaltungen:
- EP-A- 0 095 088
- DD-A- 159 222
- DE-A- 2 127 062
- FR-A- 678 324
- US-A- 3 735 687

## Beschreibung

In photogrammetrischen Luftbildkammern werden zur Erzeugung kurzer Belichtungszeiten bei hohem Lichtwirkungsgrad nach wie vor kontinuierlich rotierende Drehscheibenverschlüsse eingesetzt, da mit Verschlüssen diesen Typs die für diesen Anwendungsfall benötigten relativ großen Blendenöffnungsflächen schnell abgedeckt werden können. Drehscheibenverschlüsse bestehen meist aus zwei Scheibenpaaren, die getrieblich miteinander verbunden sind und mit unterschiedlicher Geschwindigkeit umlaufen. Die Öffnungen in den Scheiben überdecken sich dabei periodisch bei jedem durch das Ubersetzungsverhältnis bedingten Mehrfachen der beiden Umdrehungszeiten. Von den dann entstehenden Blendenöffnungen werden jedoch nur einzelne durch Betätigung einer zusätzlichen Auswahlscheibe freigegeben. Ein Verschluß diesen Typs ist beispielsweise in der DE-PS 10 90 953 beschrieben.

Nachteilig bei diesen Verschlüssen ist, daß die Zugriffszeit (t_{Z}), d.h. die Verzogerungszeit zwischen dem Betätigen des Verschlusses bis zum nächstmöglichen tatsächlichen Belichtungszeitpunkt nicht konstant ist, sondern von der Drehzahl der Scheiben bzw. der gewünschten Belichtungszeit abhängt. Dies macht sich vor allem bei langen Belichtungszeiten negativ bemerkbar, d.h. niedrigen Drehzahlen negativ bemerkbar. Da die Zugriffszeit abhängig von der momentanen Stellung, in der sich die Scheibenpaare gerade befinden, etwa bis maximal das zweihundertfache der Belichtungszeit betragen kann, ergeben sich bei langen Belichtungszeiten für die Zugriffszeit Werte von bis zu 2 Sekunden.

Lange Belichtungszeiten gewinnen nun aber bei Luftbildkammern zunehmend an Bedeutung, insbesondere weil durch die Einführung von Einrichtungen zum Ausgleich der Bewegungsunschärfe (Bildwanderung) vermehrt mit höher auflösenden, dafür jedoch geringer empfindlichen Filmen gearbeitet wird. Gerade hier stören lange und nichtkonstante Zugriffszeiten, da sich dann keine genauen Bildüberdeckungswerte mehr erzielen lassen.

Es sind eine Reihe von Lösungsansätzen bekannt, mit denen versucht wird, die Zugriffszeit in Rotationslamellenverschlüssen zu verkürzen oder jedoch zumindestens den Einfluß auf die Überdeckung zu mildern. So ist in der DE-OS 35 13 958 vorgeschlagen, die Drehzahl der Drehscheiben des Verschlusses so einzustellen, daß die Bildfolgezeit immer ein ganzzahliges Vielfaches des Zeitintervalles zwischen zwei möglichen Belichtungszeitpunkten des Verschlusses ist. Hierdurch werden zwar die Schwankungen der Zugriffszeit verringert, für lange Belichtungszeiten ergeben sich jedoch nach wie vor lange Zugriffszeiten, d.h. dieses Verfahren beschränkt die möglichen Belichtungszeiten nach oben hin.

Zur Lösung des vorstehend genannten Problems lehrt die DE-OS 35 14 433, die Größe des Sektorausschnittes der Drehscheiben mechanisch zu verändern. Dies läßt sich jedoch nur mit einem relativ großen konstruktiven Aufwand realisieren.

In der DD 15 92 22 schließlich ist ein Verschluß beschrieben, bei dem die Drehscheiben nicht getrieblich gekoppelt sind sondern von zwei separaten Antrieben einzeln angetrieben synchron drehen, wobei die Sektorenausschnitte in den beiden Scheiben jedoch zueinander versetzt sind. Zur Freigabe des Strahlenganges wird durch ein äußeres Signal eine Scheibe kurzzeitig beschleunigt und damit die Sektoren aus der Deckung gebracht. Nach der Belichtung wird die Scheibe wieder zurückgestellt.

Abgesehen von einem raltiv hohen Aufwand auf der Antriebsseite lassen sich mit diesem Verfahren jedoch nur schwer exakte Belichtungszeiten einstellen.

Es ist die Aufgabe der vorliegenden Erfindung, einen Verschluß für photogrammetrische Aufnahmekameras zu schaffen, mit dem sich von der Belichtungszeit unabhängige, konstante, möglichst kurze Zugriffszeiten erzielen lassen.

Diese Aufgabe wird durch die Merkmale des Anspruchs 1 gelöst, insbesondere dadurch, daß
- der Antrieb die Drehscheibe(n) für jeden Belichtungsvorgang aus einer Startposition heraus beschleunigt, in der die Scheibe(n) stillstehen,
- ein Winkelgeber vorgesehen ist, der die Winkelstellung der Scheibe(n) in der Startposition mißt,
- und eine Einrichtung vorgesehen ist, welche die Startposition der Scheibe(n) abhängig von der angegebenen Belichtungszeit so verstellt, daß die Laufzeit zwischen dem Beginn der Beschleunigung und der Belichtung für unterschiedliche einstellbare Belichtungszeiten im wesentlichen den gleichen Wert besitzt.

Gemäß der Erfindung wird der Verschluß also gepulst betrieben, d.h. es findet keine kontinuierliche Rotation der Scheiben statt, sondern der Verschluß wird bei jeder Belichtung neu aus einer Startposition heraus, in der die Scheiben die Öffnung abdecken, auf die Geschwindigkeit beschleunigt, die der gewünschten Belichtungszeit entspricht. Nach erfolgter Freigabe der Öffnung werden die Scheiben wieder abgebremst und wieder auf die Startposition zurückgebracht, ohne daß dabei eine weitere Öffnung der Sektoren erfolgt.

Die Realisierung dieser Maßnahmen setzt voraus, daß man den Verschluß bei kürzester Belichtungszeit auf dem maximal zwischen zwei Öffnungen zur Verfügung stehenden Weg auf die geforderte Geschwindigkeit beschleunigen und danach wieder abbremsen kann. Dies ist durch die Verwendung leistungsstarker Antriebsmotoren, beispielsweise von Gleichstrom-Permanentmagnetmotoren mit Samarium-Kobaltmagneten, sowie von Scheiben mit geringem Trägheitsmoment und einem möglichst großen Verhältnis von Schließwinkelbereich zu Öffnungsbereich der Sektoren durchaus realisierbar.

Ein möglichst großes Verhältnis von Schließ- zu Öffnungsbereich läßt sich durch Verwendung von Scheiben mit großem Durchmesser erzielen. Dies hat jedoch ein relativ großes Trägheitsmoment des Verschlusses zur Folge und erfordert deshalb kräftige Antriebe. Es ist deshalb zweckmäßig, wie bei den bekannten, kontinuierlich drehenden Drehscheibenverschlüssen zwei Scheibenpaare mit kleinerem Durchmesser zu verwenden, die über ein Übersetzungsgetriebe miteinander verbunden sind und deshalb nicht bei jeder Umdrehung öffnen sondern erst bei jedem durch das Übersetzungsverhältnis bedingten Mehrfachen der Umdrehungszahlen beider Scheibenpaare.

Entscheidend für die Erfindung ist, daß je nach der gewünschten Belichtungszeit die Startposition der Scheiben so verstellt wird, daß die Zeit vom Beginn der Beschleunigung beim Start der Verschlußauslösung bis zu dem Zeitpunkt, in dem der Verschluß seine Mittenöffnung erreicht, konstant und damit unabhängig von der Belichtungszeit ist. Hierzu wird die Startposition aus der jeweils geforderten Belichtungszeit abgeleitet. Dies läßt sich in einer geeigneten Elektronik leicht in der Form realisieren, daß zu jeder Belichtungszeit die entsprechende Startposition, d.h. die Winkelposition der Scheiben bzw. des Antriebs in einer Datentabelle abgelegt ist.

Weitere Vorteile der Erfindung ergeben sich aus der nachfolgenden Beschreibung eines Ausführungsbeispiels anhand der Figuren 1-3 der beigefügten Zeichnungen.
- Figur 1: ist eine vereinfachte Skizze, die in Aufsicht die zwei Scheibenpaare des Drehscheibenverschlusses zeigt;
- Figur 2: ist ein Weg/Zeitdiagramm, in dem der Verlauf der Drehscheiben für zwei unterschiedliche Belichtungszeiten dargestellt ist;
- Figur 3: ist eine Prinzipskizze der Regelelektronik für den erfindungsgemäßen Verschluß.

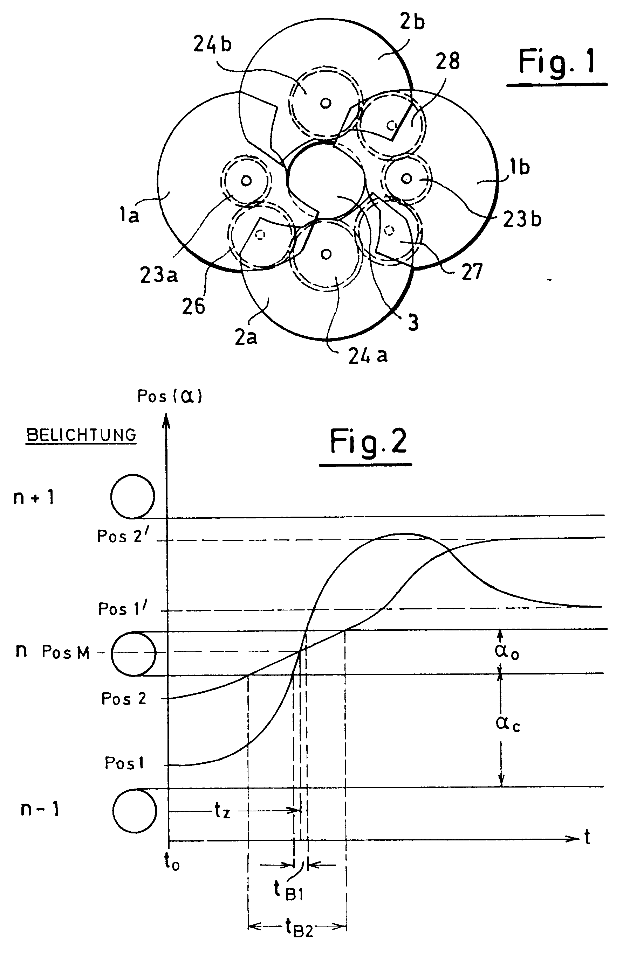

Der in Figur 1 dargestellte Verschluß sieht zwei Scheibenpaare (1a und 1b) bzw. (2a und 2b) vor, die jeweils mit gleicher Geschwindigkeit entgegengesetzt zueinander rotieren. Die beiden Scheibenpaare (1a/b und 2a/b) sind getrieblich so miteinander verbunden, daß sich ihre Drehzahlen wie 2:3 verhalten. Entsprechend geben die sektorenförmigen Ausnehmungen der Scheiben (1a/b bzw. 2a/b) die Blendenöffnung (3) jeweils nach drei Umdrehungen des Scheibenpaares (1a/b) frei. Das Getriebe für die Scheibenpaare ist in der Figur 1 vereinfacht als Stirnradgetriebe dargestellt. Dabei sind die Zahnräder (23a und 23b) bzw. (24a und 24b) für die Scheibenpaare (1a/b) und (2a/b) durch Stirnräder (26-28) miteinander gekoppelt. Der in Figur 1 nicht dargestellte Antriebsmotor ist auf die Welle eines der Stirnräder (26-28) aufgesetzt.

Im Gegensatz zum Stand der Technik laufen die beiden Scheibenpaare jedoch nicht dauernd um, sondern werden für jeden Belichtungsvorgang aus dem Stillstand von einer vorher eingestellten Startposition heraus auf die Geschwindigkeit beschleunigt, die der vorgewählten Belichtungszeit entspricht. Dies wird durch das Weg/Zeitdiagramm nach Figur 2 verdeutlicht. Für kurze Belichtungszeiten startet der Verschluß von einer mit (Pos1) bezeichneten Winkelposition heraus. Die Position (Pos1) für die kürzeste Belichtungszeit ist so gewählt, daß der Drehwinkelbereich bis zur Mittenposition (PosM) für die Verschlußöffnung gerade ausreicht, um den Verschluß auf die Geschwindigkeit zu beschleunigen, die dieser Belichtungszeit (t_{B1}) entspricht. Die hierfür benötigte Zeitdauer ist die kleinst mögliche Laufzeit (t_{Z}). Nach dem Überschießen über die Position (PosM) hinaus, in der die Belichtung stattfindet, werden die Scheibenpaare wieder abgebremst und auf die Startposition (Pos1′) zurückgestellt, ohne daß hierbei eine weitere Öffnung der Sektoren der Scheiben erfolgt. Im Diagramm nach Figur 2 sind der Öffnungsbereich des Verschlusses mit α o und der Schließbereich mit α c bezeichnet.

Bei längeren gewählten Belichtungszeiten startet der Verschluß beispielsweise von der in Figur 2 mit (Pos2) bezeichneten Position aus. Diese Position ist so gewählt, daß die Zeit, die vergeht, bis die Scheiben auf die für die Belichtungszeit nötige Geschwindigkeit beschleunigt haben, plus der Zeit, während der sich die Scheiben mit dieser Geschwindigkeit bis zur Mittenöffnung (PosM) bewegen, gerade der Laufzeit (t_{Z}) entspricht. Sobald der Belichtungsvorgang beendet ist und die Sektoren der Scheiben die Blendenöffnung (3) wieder bedecken, werden die Drehscheiben nochmals beschleunigt, so daß sie möglichst schnell die Stellung (Pos2′) erreichen, von der sie zum nächsten Belichtungsvorgang neu starten.

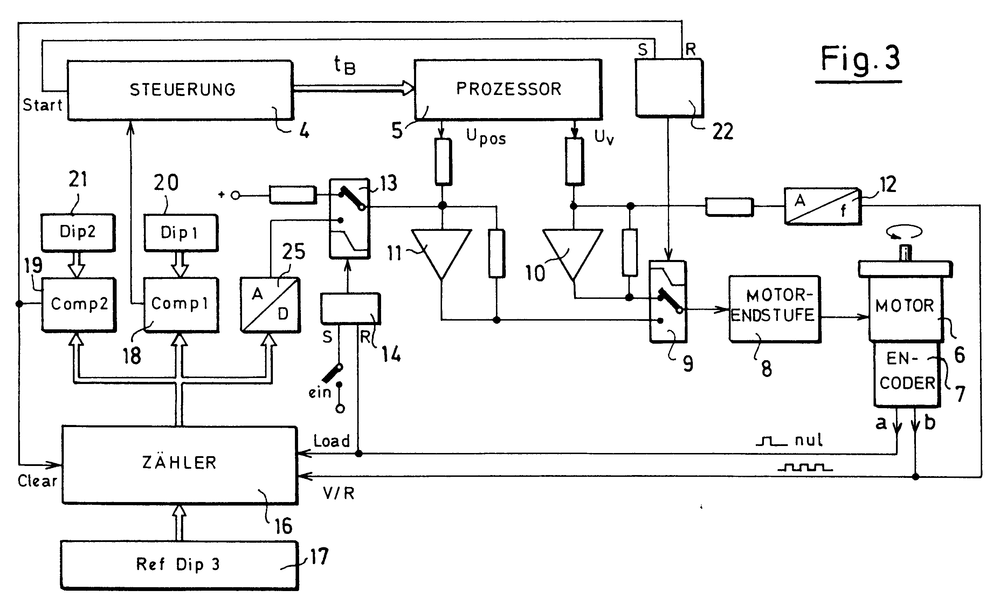

Die Elektronik, die den Verschluß in der eben beschriebenen Art und Weise steuert, ist in Figur 3 dargestellt. Dort ist mit (4) die Steuerung der gesamten Luftbildkammer bezeichnet. Zur Steuerung (4) sind beispielsweise ein Belichtungsautomat, die Elektronik zur Einstellung der Blende der Luftbildkammer, die Elektronik für den Filmvorschub und gegebenenfalls eine Einrichtung zum Ausgleich der Bildwanderung zuzurechnen. In Bezug auf den Verschluß der Kammer liefert die Steuerung (4) die einzustellende Belichtunszeit (t_{B}) sowie die Startimpulse, durch die der Verschluß ausgelöst wird.

Kernstück der eigentlichen Verschlußsteuerung ist der Prozessor (5). Der Prozessor (5) empfängt den Wert für die einzustellende Belichtungszeit von der Steuerung (4) und berechnet daraus die Startpositionen für die Verschlußscheibenpaare sowie die Geschwindigkeit, die die Scheibenpaare w1hrend der Verschlußöffnung besitzen müssen. Die entsprechenden Werte können in einer Datentabelle des Prozessors (5) abgelegt sein oder entsprechend einem festgelegten Firmware-Programm aus den bekannten Gleichungen für eine gleichmäßig beschleunigte Bewegung berechnet werden. Als Ergebnis dieser Berechnung werden nach entsprechender Digital/Analogwandlung zwei Spannungen (Uₚₒₛ) und (Uᵥ) ausgegeben, die der Winkelstellung in der Startposition und der Geschwindigkeit beim Durchgang durch die Verschlußöffnung proportional sind.

Der Antriebsmotor (6) für den Verschluß ist mit einem inkrementalen Encoder (7) versehen. Der Encoder (7) besitzt zwei Ausgänge: Auf dem mit b bezeichneten Ausgang liegen die inkrementalen Zählimpulse des Encoders, während der mit a bezeichnete Ausgang einen Nullimpuls beim Überlaufen einer Marke liefert. Dieser Nullimpuls dient zum Initialisieren des Winkelmeßsystems wie noch nachfolgend beschrieben werden wird.

Der mit (Uᵥ) bezeichnete Ausgang des Prozessors (5), der die der Sollgeschwindigkeit des Verschlusses entsprechende Spannung liefert, und der Ausgang b des Encoders (7) sind in einen Geschwindigkeitsregelkreis eingebunden. Hierzu ist das Signal (Uᵥ) auf einen Operationsverstärker (10) gegeben, dessen Ausgang über einen Umschalter (9) an den Eingang der Motorendstufe (8) gelegt ist. Die Frequenz der Ausgangsimpulse des Encoders (7) wird in einem Baustein (12) in eine analoge Spannung gewandelt und auf den Eingang des Operationsverstärkers (10) zurückgekoppelt. Bei korrekter Bemessung dieses Regelkreises läuft also der Motor (6) nach Umschalten des Schalters (9) in die fett gezeichnete Stellung aus der Ruhelage mit konstanter durch die Endstufe (8) vorgegebener Beschleunigung los, bis er die durch (Uᵥ) vorgegebene Sollgeschwindigkeit erreicht. Von da ab bewegt er sich mit dieser Sollgeschwindigkeit gleichförmig weiter.

Der Inkrementalausgang b des Encoders (7), der in üblicher Weise zur Richtungserkennung zwei phasenverschobene Pulsfolgen liefert, ist außerdem an den Eingang eines Zählers (16) gelegt. Der Zählerinhalt wird in einem nachgeschalteten Digital/Analogwandler (25) in eine analoge Spannung umgesetzt, die über einen Umschalter (13) auf dem Eingang eines zweiten Operationsverstarkers (11) rückgekoppelt wird. Dem Eingang des Operationsverstärkers (11) ist außerdem die Spannung (Uₚₒₛ) zugeführt, die der einzustellenden Sollposition proportional ist, von der aus die Verschlußscheiben aus der Ruhelage starten. Der Ausgang des Operationsverstärkers (11) ist auf den zweiten Kontakt des Umschalters (9) gelegt. Wenn der Schalter (9) also in die gestrichelte Stellung umschaltet ist über die Motorendstufe (8), den Motor (6), den Encoder (7), den Zähler (16) und den Digital/Analogwandler (25) sowie den Operationsverstärker (11) ein Positionsregelkreis geschlossen, der dafür sorgt, daß die Verschlußscheiben in die durch (Uₚₒₛ) vorgegebene Startposition einlaufen.

Der Umschalter (13) ist in der fett gezeichneten Stellung über einen Widerstand an die Betriebsspannung gelegt. Betätigt wird der Umschalter (13) vom Ausgangssignal eines Gatters (14). An dessen Eingange S und R sind das Einschaltsignal gelegt, mit dem die Elektronik erstmalig gestartet wird, sowie der Nullimpuls vom Ausgang a des Encoders (7). Die Funktion dieser Anordnung ist folgende: Beim erstmaligen Einschalten geht der Umschalter (13) in die fett gezeichnete Stellung, so daß der Motor (6) auf jeden Fall losläuft, bis die zur Initialisierung notwendige Nullimpulsmarke des Encoders (7) überfahren ist. Das Nullimpulssignal vom Ausgang a des Encoders (7) ist außerdem an den LOAD-Eingang des Zählers (16) gelegt. Sobald dieses Signal erscheint, wird die der Nullimpulsmarke zugeordnete Referenzposition, die mit dem Dipschalter (17) eingestellt wurde, in den Zähler (16) eingelesen. Danach schaltet der Umschalter (13) um und schließt den nun initialisierten Positionsregelkreis.

Der Ausgang des Zählers (16) ist weiterhin an zwei Komparatoren (18) und (19) angeschlossen, deren zweiter Eingang jeweils mit einem Dipschalter (20) bzw. (21) verbunden ist. Der Dipschalter (20) ist auf die Position eingestellt, die in Figur 2 mit (PₒₛM) bezeichnet ist, d.h. auf den Mittelwert der Verschlußöffnung. Der Ausgang des Komparators (18) liefert ein Signal, wenn der Inhalt des Zählers (16) mit dem am Dipschalter (20) eingestellten Wert übereinstimmt, d.h. zum exakten Mittenzeitpunkt der Belichtung.

Am Dipschalter (21) ist ein Wert eingestellt, der dem Ende eines kompletten Belichtungsvorganges entspricht. Das Ausgangssignal des Komparators (19) dient dann dazu, den Zähler (16) über dessen Clear-Eingang zurückzusetzen.

Der Ausgang des Komparators (19) ist außerdem an den Eingang eines Gatters (22) gelegt, dessen anderer Eingang mit dem Startausgang der Steuerung (4) verbunden ist. Vom Gatter (22) wird der Umschalter (9) betätigt, der zwischen den beiden Regelkreisen, dem Geschwindigkeitsregelkreis und dem Positionsregelkreis umschaltet. Durch diese Maßnahme wird folgendes erreicht:

Wenn die Steuerung (4) das Startsignal zur Verschlußöffnung liefert, schaltet der Umschalter (9) in den Geschwindigkeitsregelkreis um und es läuft der anhand von Fig. 2 beschriebene Belichtungsvorgang ab. Nach dem Ende der Belichtung wird über den Komparator (19) wieder in den Positionsregelkreis umgeschaltet und die Verschlußscheiben laufen mit der durch den Strom der Motorendstufe vorgegebenen maximalen Beschleunigung in die Startposition, von der aus der nächste Belichtungsvorgang beginnt. Dieses Einlaufen in die Startposition kann ein Vorlaufen oder auch ein Zurücklaufen sein, je nachdem, ob gerade eine kurze oder eine lange Belichtungszeit für den Verschluß gewählt war. Hierzu wird auf die entsprechende Darstellung in Figur 2 verwiesen.

Mit einem Verschluß gemäß dem vorstehend beschriebenen Ausführungsbeispiel konnte für einen Bereich der Belichtungszeiten zwischen 1/50 Sekunde bis 1/500 Sekunde eine Zugriffszeit von nur 50 ms mit einer Genauigkeit von besser als ± 10% eingehalten werden. Das entspricht bei minimalen Bildintervallzeiten von ca. 1 Sekunde einer Genauigkeit für die Überdeckung der Bilder von besser als 5 Promille. Da die Gestaltung der Sektoren der Scheiben dieses gepulst betriebenen Verschlusses denen von üblichen Drehscheibenverschlüssen entspricht, sind mit dem Verschluß auch die gleichen Wirkungsgrade erzielbar.

## Patentansprüche

1. Verschluß für eine photogrammetrische Aufnahmekamera, bestehend aus einer oder mehreren Drehscheiben (1a/b, 2a/b), die entsprechend ihrer Winkelstellung eine Blendenöffnung (3) ab- oder aufdecken, einem Antrieb (6), der bei jedem Belichtungsvorgang die Drehscheibe(n) aus einer Startposition, in der sie sich im Stillstand befinden und die Blendenöffnung (3) abdecken, in Rotationsbewegung setzt, so daß eine zeitweilige Aufdeckung der Blendenöffnung (3) stattfindet, und einer Elektronik (4,5,8), die die Geschwindigkeit des Antriebs (6) entsprechend der eingestellten Belichtungszeit (t_{B}) steuert, dadurch gekennzeichnet, daß
ein Winkelgeber (7) zur Ermittlung der Winkelstellung der Drehscheibe(n) (1a/b,2a/b) vorgesehen ist,
und daß
die Elektronik (4,5,8) unter Verwendung der vom Winkelgeber erzeugten Signale die Startposition (Pos1,Pos2) der Drehscheibe(n) in Abhängigkeit von der eingestellten Belichtungszeit (t_{B}) so verstellt, daß, für unterschiedliche einstellbare Belichtungszeiten (t_{B1},t_{B2}), die Laufzeit (t_{z}) zwischen dem Beginn (tₒ) der Rotationsbewegung der Drehscheiben und dem Zeitpunkt, wo sie eine Position (PosM) entsprechend der Mittenöffnung der Blendenöffnung (3) erreichen, im wesentlichen konstant ist.

2. Verschluß nach Anspruch 1, dadurch gekennzeichnet, daß der Verschluß mehrere, mit unterschiedlichem Übersetzungsverhältnis angetriebene Drehscheiben bzw. Drehscheibenpaare (1a/b,2a/b) aufweist.

3. Verschluß nach Anspruch 2, dadurch gekennzeichnet, daß die Paare von Drehscheiben getrieblich miteinander gekoppelt sind.

4. Verschluß nach Anspruch 1, dadurch gekennzeichnet, daß zur Steuerung des Antriebs (6) die Elektronik (4,5,8) Vorgabewerte (Uₚₒₛ,Uᵥ) für die Soll-Startposition (Pos1, Pos2) und die Soll-Geschwindigkeit (V_{BEL}) der Drehscheibe(n) entsprechend der eingestellten Belichtungszeit (t_{B}) und der konstanten Laufzeit (t_{z}) berechnet, und daß diese Vorgabewerte (Uₚₒₛ,Uᵥ) jeweils einem Positionsregelkreis (11,16,25) und einem Geschwindigkeitsregelkreis (10,12) zugeführt werden.

5. Verschluß nach Anspruch 4, gekennzeichnet durch Mittel (9,22) zum Umschalten zwischen dem Positionsregelkreis (5,11,16) und dem Geschwindigkeitsregelkreis (10,12) in entsprechend verschiedenen Phasen jedes Belichtungsvorganges.

## Claims

1. Shutter for a photogrammetric camera comprising
- one or more rotatable discs (1a/b, 2a/b), which open or close a shutter opening (3) in correspondence to their angular position,
- a motor (6) which accelerates the disc(s) out of a start position into a rotational movement so that the shutter opening (3) is temporarily opened during each exposure operation, wherein the disc(s) stand still and close the shutter opening (3) in the start position, and
- an electronic unit (4, 5, 8) which controls the velocity of the motor (6) in correspondence to the pregiven exposure time (t_{B}),
characterized by the fact, that
- said shutter is further provided with an angle encoder (7) which determines the angular position of the disc(s) (1a/b, 2a/b) and
- the electronic unit (4, 5, 8) displaces the start position (Pos1, Pos2) of the disc(s) by using the angle encoder signals in correspondence to the pregiven exposure time (t_{B}) so as to cause the access time (t_{Z}) between the start (t₀) of the rotational movement of the discs and the time when they reach a position (PosM) corresponding to the center position for the shutter opening (3) to be constant.

2. Shutter according to claim 1, characterized by the fact, that the shutter comprises a plurality of discs or disc pairs (1a/b, 2a/b) which are driven with different transmission ratios.

3. Shutter according to claim 2, characterized by the fact, that the disc pairs are interconnected by a gear transmission.

4. Shutter according to claim 1, characterized by the fact, that the electronic unit (4, 5, 8) determines preselected values for the preselected start position (Uₚₒₛ, Uᵥ) and the preselected velocity (V_{BEL}) of the disc(s) to control the motor (6) in correspondence to the pregiven exposure time (t_{B}) and the constant access time (t_{Z}) and that the electronic unit (4, 5, 8) applies the preselected values (Uₚₒₛ, Uᵥ) to a position control loop (11, 16, 25) and a speed control loop (10, 12).

5. Shutter according to claim 4, characterized by switching means for switching between the position control loop (5, 11, 16) and the speed control loop (10, 12) in correspondence to different phases of each exposure operation.

## Revendications

1. Obturateur de chambre de prise de vues photogrammétrique composé d'un ou de plusieurs disques rotatifs (1a/b, 2a/b) qui, selon leur position angulaire, recouvrent ou dégagent un orifice d'exposition (3), d'un moteur (6) qui, à chaque exposition, met en rotation le/les disque(s) rotatifs immobilisés dans leur position de départ et recouvrant l'orifice d'exposition (3), de manière à ce que ledit orifice d'exposition (3) soit dégagé temporairement, ainsi que d'une électronique (4, 5, 8) qui commande le régime du moteur (6) en fonction du temps d'exposition réglé (t_{B}), caractérisé en ce qu'un capteur angulaire (7) est prévu pour la détermination de la position angulaire du/des disque(s) rotatif(s) (1a/b, 2a/b)
et en ce que
l'électronique (4, 5, 8) utilise les signaux générés par le capteur angulaire pour régler la position de départ (pos. 1, pos. 2) du/des disque(s) rotatif(s) en fonction du temps d'exposition (t_{B}), de manière à ce que la durée (t_{z}) d'un cycle allant du début (t₀) du mouvement de rotation des disques rotatifs jusqu'à l'arrivée dans la position (posM) correspondant au dégagement complet de l'orifice d'exposition (3) soit sensiblement constante pour différents temps de pose réglables (t_{B1} t_{B2}).

2. Obturateur selon la revendication 1, caractérisé en ce que l'obturateur présente plusieurs disques rotatifs ou paires de disques rotatifs (1a/b, 2a/b) qui sont entrâinés selon différents rapports de transmission.

3. Obturateur selon la revendication 2, caractérisé en ce que les paires de disques rotatifs sont rendues solidaires par un engrenage.

4. Obturateur selon la revendication 1, caractérisé en ce que l'électronique (4, 5, 8) calcule, pour la commande du moteur (6), des valeurs (Uₚₒₛ, Uᵥ) définissant la position nominale de départ (pos. 1, pos. 2) et la vitesse nominale (V_{BEL}) du/des disque(s) rotatif(s) en fonction du temps de pose réglé (t_{B}) et de la durée de cycle constante (t_{z}) et que lesdites valeurs (Uₚₒₛ, Uᵥ) sont appliquées respectivement à une boucle d'asservissement de position (11, 16, 25) et à une boucle d'asservissement de vitesse (10, 12).

5. Obturateur selon la revendication 4, caractérisé en ce qu'il est doté de moyens (9, 22) assurant la commutation entre la boucle d'asservissement de position (5, 11, 16) et la boucle d'asservissement de vitesse (10, 12) dans les phases correspondantes de chaque exposition.
